# FASCICULE DE BREVET EUROPEEN

(11) **EP 3 763 566 B1**
(45) Date de publication et mention de la délivrance du brevet: **18.05.2022**
(21) Numéro de dépôt: 20184166.5
(22) Date de dépôt: 06.07.2020
(51) Int. Cl.: B60N 2/30, B61D 33/00, B60N 2/24

(54) **DISPOSITIF D'ACCUEIL DE PASSAGERS ET VÉHICULE DE TRANSPORT EN COMMUN ASSOCIÉ**
VORRICHTUNG ZUR AUFNAHME VON PASSAGIEREN UND ENTSPRECHENDES GEMEINSCHAFTSTRANSPORTFAHRZEUG
DEVICE FOR WELCOMING PASSENGERS AND ASSOCIATED PUBLIC TRANSPORT VEHICLE

(30) Priorité: 08.07.2019 FR 1907627
(43) Date de publication de la demande: 13.01.2021
(73) Titulaire: ALSTOM Transport Technologies, 93400 Saint-Ouen (FR)
(72) Inventeur: MIGLIANICO, Denis, 69160 Tassin (FR)
(74) Mandataire: Lavoix

(56) Documents cités:
- WO-A1-02/46003
- CN-A- 101 293 529
- CN-A- 102 602 412
- CN-Y- 201 183 490
- DE-A1-102009 046 628

## Description

La présente invention concerne un véhicule de transport en commun comportant un compartiment de transport de passagers, comme décrit dans le document CN201183490Y.

Les véhicules de transport en commun tels que des bus, des tramways ou des trains comportent en général des compartiments de transport de passagers destinés à accueillir des passagers lors de leur transport. Ces compartiments comportent fréquemment des sièges de types variés, et notamment des sièges à assise mobile ou relevable, souvent appelés « strapontins ». Ces sièges permettent à des passagers de s'asseoir mais leur assise peut également être relevée en cas d'affluence. En effet, une personne assise sur un tel strapontin occupe plus de place que si elle était debout, de sorte que lorsque l'assise est relevée l'emprise au sol du passager est réduite et le compartiment peut accueillir plus de passagers debout que si l'assise était abaissée.

Cependant, il arrive que des passagers restent assis sur les sièges à assise mobile même si le nombre de personnes présentes dans le compartiment est élevé. Ces passagers causent alors un inconfort aux passagers debout dans le compartiment, puisque l'espace disponible pour ceux-ci est accaparé par la personne assise et son siège, et qu'en cas d'affluence la présence de l'assise et des genoux de la personne assise est une gêne pour les personnes debout aux alentours. En outre, le nombre de personnes que le véhicule peut accueillir est réduit en conséquence.

Il existe donc un besoin pour un véhicule de transport en commun comportant un compartiment de transport de passagers comprenant un siège à assise mobile, ce véhicule présentant une capacité de transport augmentée par rapport aux véhicules de l'état de la technique.

A cet effet, il est proposé un dispositif d'accueil de passager pour véhicule de transport en commun, destiné à être installé dans un compartiment dudit véhicule, le dispositif d'accueil comportant :
- une assise mobile entre une première position dans laquelle l'assise est configurée pour permettre à un passager de s'asseoir sur l'assise et une deuxième position empêchant un passager de s'asseoir sur l'assise, et
- des moyens de détection propres à détecter une présence de l'assise dans la première position,
le dispositif d'accueil comportant, en outre, un module de signalisation propre à recevoir une valeur d'un paramètre du compartiment du véhicule, le paramètre étant fonction d'une densité de passagers présents dans le compartiment, et en ce que le module de signalisation est configuré pour générer un signal à destination d'au moins un passager présent dans le compartiment lorsque la valeur est supérieure ou égale à un seuil prédéterminé et que l'assise est dans la première position.

Grâce à l'invention, une personne assise sur l'assise du siège est incitée à se relever lorsque la densité de passagers dans le compartiment passagers est supérieure ou égale à un seuil prédéterminé. Ainsi, le véhicule est susceptible de transporter un plus grand nombre de passagers, dans des conditions de confort améliorées, que dans les véhicules de transport en commun de l'état de la technique.

Selon des modes de réalisation particuliers, le dispositif comporte un ou plusieurs des caractéristiques suivantes, prises isolément ou selon toutes les combinaisons techniquement possibles :
- le dispositif comprend un détecteur configuré pour mesurer la valeur du paramètre du compartiment, le paramètre étant une masse supportée par un sol du compartiment ou un nombre de passagers présents dans le compartiment.
- le détecteur comporte un module de calcul et un imageur propre à acquérir une image du compartiment, le module de calcul étant configuré pour calculer le nombre de passagers présents dans le compartiment à partir au moins de l'image acquise.
- le signal est un signal à destination d'un passager assis sur l'assise.
- le module de signalisation comporte un actionneur propre à faire vibrer l'assise, le signal comportant une vibration de l'assise.
- le module de signalisation comporte au moins un émetteur lumineux propre à émettre un signal lumineux.
- l'assise présente un premier pourtour, le module de signalisation comportant une pluralité d'émetteurs lumineux disposés sur le premier pourtour.
- le dispositif d'accueil comporte un dossier, le dossier présentant un deuxième pourtour, le module de signalisation comportant une pluralité d'émetteurs lumineux disposés sur le deuxième pourtour.

Il est également proposé un véhicule de transport en commun comportant au moins un compartiment de transport de passagers, le compartiment comprenant un support et au moins un dispositif d'accueil de passager comportant une assise supportée par le support, caractérisé en ce que le dispositif d'accueil est selon l'une quelconque des revendications précédentes.

Selon un mode de réalisation, le compartiment comporte une porte permettant aux passagers d'entrer dans le compartiment depuis l'extérieur du véhicule.

Des caractéristiques et avantages de l'invention apparaîtront à la lecture de la description qui va suivre, donnée uniquement à titre d'exemple non limitatif et faite en référence au dessin annexé, sur lequel :
[Fig 1] la figure 1 est une représentation schématique partielle en coupe d'un véhicule de transport en commun selon l'invention, comportant un siège, et
[Fig 2] la figure 2 est une vue en perspective du siège de la figure 1.

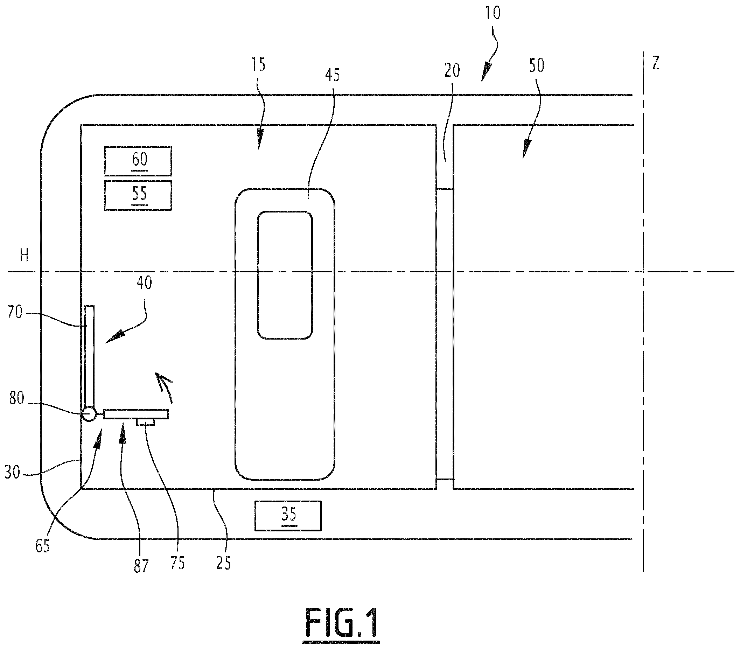

Un premier exemple de véhicule 10 de transport en commun selon l'invention est représenté partiellement sur la figure 1. Le véhicule 10 est, par exemple, un bus, un train, une voiture de véhicule ferroviaire tel qu'un wagon ou encore un tramway ou une portion d'un tramway, ou encore un avion.

Le véhicule 10 comporte au moins un compartiment 15 de transport de passagers.

Chaque compartiment 15 est configuré pour accueillir des passagers pendant le déplacement du véhicule 10.

Le compartiment 15 comporte un ensemble de parois 20, un sol 25, un support 30, au moins un détecteur 35 et un dispositif d'accueil de passager 40.

Dans la suite de cette description, le dispositif d'accueil 40 est appelé « siège ».

Le compartiment 15 comporte, par exemple, au moins une porte 45 permettant aux passagers d'entrer dans le compartiment 15 depuis l'extérieur du véhicule 10. Par exemple, le compartiment 15 est une plate-forme destinée à permettre aux passagers de pénétrer dans un autre compartiment 50, à travers le compartiment 15, depuis l'extérieur du véhicule 10.

Les parois 20 délimitent le compartiment 15 dans un plan horizontal. Par exemple, les parois 20 séparent le compartiment 15 du compartiment 50 et de l'extérieur du véhicule 10. Ainsi, la porte 45 et, optionnellement, une ou plusieurs portes permettant la communication entre les compartiments 15 et 50 sont ménagées chacune dans une paroi 20.

Le sol 25 délimite le compartiment 15 selon une direction verticale Z. Le sol 25 est configuré pour supporter les passagers présents dans le compartiment 15.

Le support 30 est configuré pour supporter au moins partiellement le siège 40. Par exemple, le support 30 est l'une des parois 20, ou encore un poteau ou un ensemble de pieds fixant au moins une partie du siège 40 au sol 25.

Chaque détecteur 35 est configuré pour mesurer des valeurs d'un paramètre du compartiment 15.

Le paramètre est fonction d'une densité de passagers présents dans le compartiment 15. En particulier, le paramètre augmente avec la densité de passagers présents dans le compartiment 15.

Il est notamment entendu par « densité de passagers » un nombre de passagers par unité de surface du sol 25. En particulier, la densité de passagers est le résultat de la division du nombre de passagers présents dans le compartiment 15 par l'aire totale du sol 25.

En variante, la densité de passagers est une densité locale de passagers dans une zone du compartiment 15 comportant le siège 40.

Chaque détecteur 35 est, en outre, configuré pour générer un premier signal lorsque la valeur mesurée est supérieure ou égale à un seuil prédéterminé. Le seuil correspond notamment à la présence d'une densité de passagers supérieure ou égale à 4 passagers par mètre carré.

Par exemple, le détecteur 35 est configuré pour mesurer des valeurs du paramètre avec une période temporelle prédéterminée, cette période temporelle étant notamment comprise entre 0,5 secondes (s) et 2 s.

Le paramètre est, par exemple, une masse supportée par le plancher 25. En effet, la masse supportée par le plancher 25 est fonction du nombre de passagers présents dans le compartiment 15. Dans ce cas, le seuil est alors égal au produit d'une masse de référence, exprimée en kilogrammes, et de l'aire du sol 25, exprimée en mètres carré.

La masse de référence est, par exemple, comprise entre 130 et 160. Cela correspond, selon les pays, à environ deux passagers, en moyenne. Le seuil prédéterminé correspond alors à environ deux passagers par mètre carré du sol 25.

En variante, la masse de référence est comprise entre 260 et 320, correspondant à environ 4 passagers.

Dans ce cas, le détecteur 35 est, par exemple, configuré pour déterminer un déplacement du plancher 25, selon la direction verticale Z, par rapport à une position de référence dans laquelle aucun passager n'est présent dans le compartiment 15.

En variante, le paramètre est un nombre de passagers présents dans le compartiment 15, ou dans une zone comportant le siège 40 du compartiment 15. Le seuil prédéterminé est alors, par exemple, supérieur ou égale à deux fois l'aire du sol 25, exprimée en mètres carré, notamment égal à quatre fois l'aire du sol 25, exprimée en mètres carré.

Dans ce cas, le détecteur 35 comporte, par exemple, un imageur 55 et un module de calcul 60.

L'imageur 55 est configuré pour acquérir des images du compartiment 15 et pour transmettre les images au module de calcul. L'imageur 55 est, par exemple, fixé à un plafond du compartiment 15.

Le module de calcul 60 est configuré pour déterminer le nombre de passagers présents dans le compartiment 15, ou dans ladite zone, à partir d'une ou plusieurs images acquises par l'imageur 55. En particulier, le module de calcul 60 est configuré pour identifier, sur les images, des passagers par reconnaissance d'image.

Par exemple, le module de calcul 60 est un module électronique comportant une mémoire et un processeur, la mémoire comportant des instructions logicielles qui, lorsqu'elles sont exécutées par le processeur, mettent en oeuvre un procédé d'identification d'un ou plusieurs passagers sur les images reçues.

Le siège 40 comporte une assise 65, un dossier 70, des moyens de détection et un module de signalisation 75.

L'assise 65 est supportée par le support 30. Par exemple, l'assise 65 est montée sur une charnière 80 fixée au support 30. La charnière 80 est notamment configurée pour permettre une rotation de l'assise 65 autour d'un axe horizontal.

L'assise 65 est mobile par rapport au support 30 entre une première position et une deuxième position. En particulier, l'assise 65 est mobile en rotation autour de la charnière 80 entre la première position et la deuxième position. Cela est représenté par une flèche sur la figure 1.

Lorsque l'assise 65 est dans la première position, représentée sur la figure 1, l'assise 65 est configurée pour permettre à un passager de s'asseoir sur l'assise 65. Par exemple, l'assise 65 est sensiblement horizontale lorsque l'assise 65 est dans la première position.

Lorsque l'assise 65 est dans la deuxième position, l'assise 65 est configurée pour empêcher un passager de s'asseoir sur l'assise 65. Par exemple, l'assise 65 est sensiblement verticale lorsque l'assise 65 est dans la première position.

En particulier, la charnière 80 est, de manière connue, configurée pour exercer sur l'assise une force tendant à déplacer l'assise de sa première position vers sa deuxième position lorsqu'aucun passager n'exerce une force sur l'assise 65.

L'assise 65 présente une face d'assise 85, une face inférieure 87 et une première face périphérique 90.

La face d'assise 85 est prévue pour qu'un passager s'assoie sur la face d'assise 85 lorsque l'assise 65 est dans la première position. Ainsi, la face d'assise 85 est dirigée vers le haut, par exemple en étant sensiblement horizontale, notamment horizontale à 10 degrés près, lorsque l'assise 65 est dans la première position.

La face inférieure 87 est opposée à la face d'assise 85. En particulier, lorsque l'assise 65 est dans la première position, la face inférieure 87 et la face d'assise 85 délimitent l'assise 65 selon la direction verticale Z. Dans cette première position, la face inférieure 87 est dirigée vers le bas.

La première face périphérique 90 s'étend entre la face d'assise 85 et la face inférieure 87. En particulier, lorsque l'assise 65 est dans la première position, la première face périphérique 90 délimite l'assise 65 dans un plan perpendiculaire à la direction verticale Z.

Le dossier 70 est, par exemple, fixé à une paroi 20, ou encore à la charnière 80.

Le dossier 70 comporte une face avant 95, une face arrière 100 et une deuxième face périphérique 105.

La face avant 95 est prévue pour qu'un passager assis sur la face d'assise 85 appuie son dos contre la face avant 95 lorsque l'assise 65 est dans la première position. Ainsi, la face avant 95 est dirigée vers l'intérieur du compartiment 15, par exemple en étant sensiblement verticale, notamment horizontale à 10 degrés près, lorsque l'assise 65 est dans la première position.

La face arrière 100 est opposée à la face avant 95. En particulier, la face arrière 100 et la face avant 95 délimitent le dossier 70 selon une direction horizontale H perpendiculaire à la face avant 95. La face arrière 100 est, par exemple, fixée au support 30.

La deuxième face périphérique 105 s'étend entre la face avant 95 et la face arrière 100. En particulier, la deuxième face périphérique 105 délimite le dossier 70 dans un plan perpendiculaire à la direction verticale Z.

Les moyens de détection sont configurés pour détecter une présence de l'assise 65 dans la première position, et pour transmettre au module de signalisation 75 un deuxième signal lorsque l'assise 65 est dans la première position.

Par exemple, les moyens de détection comportent deux contacts électriques mis en contact l'un avec l'autre lorsque l'assise 65 est dans la première position de manière à permettre la transmission d'un deuxième signal électrique au module de signalisation 75. En variante, les moyens de détection comportent un potentiomètre intégré à la charnière 80 et permettant de mesurer une rotation de la charnière, ou encore un capteur angulaire optique.

Le module de signalisation 75 est configuré pour générer un troisième signal à destination d'au moins un passager présent dans le compartiment 15 lorsque la valeur mesurée par le détecteur est supérieure au seuil et que l'assise 65 est dans la première position, par exemple suite à la réception des premier et deuxième signaux. En particulier, le module de signalisation 75 est configuré pour générer le troisième signal lorsque les premiers et deuxième signaux sont reçus lors d'une même plage temporelle présentant une durée inférieure ou égale à la période temporelle du détecteur 35.

Le troisième signal est, par exemple, un signal à destination d'un passager assis sur l'assise 65.

Selon un mode de réalisation, le troisième signal est une vibration de l'assise 65 et/ou du dossier 70, en particulier une vibration de l'assise 65. Dans ce cas, le module de signalisation 75 est, par exemple, fixé à l'assise 65, par exemple fixé à la face inférieure 87 ou encore accueilli dans une cavité intérieure de l'assise 65.

En variante, le signal est un signal sonore, ou encore un signal lumineux.

Le module de signalisation 75 comporte, par exemple, un module de contrôle et un actionneur.

Le module de contrôle est configuré pour recevoir les premier et deuxième signaux et pour commander l'activation de l'actionneur lorsque la valeur mesurée par le détecteur est supérieure au seuil et que l'assise 65 est dans la première position, par exemple suite à la réception des premier et deuxième signaux.

L'actionneur est configuré pour faire vibrer le siège 40, notamment l'assise 65 lorsque l'actionneur est activé.

Par exemple, l'actionneur comporte un moteur électrique et une masse que le moteur est propre à déplacer, par exemple à mettre en rotation autour d'un axe dont le centre de gravité de la masse est distant, pour générer une force périodique sur l'assise 65. Il est à noter que de nombreux types d'actionneurs, appelés vibreurs, sont susceptibles d'être utilisés.

Ainsi, lorsque l'actionneur est activé, l'assise 65 vibre autour de la première position.

En particulier, l'actionneur est configuré pour faire vibrer l'assise 65 selon la direction verticale, c'est-à-dire à générer un mouvement périodique de l'assise 65 entre deux positions extrêmes séparées verticalement l'une de l'autre.

L'actionneur est, par exemple, configuré pour imposer une fréquence de vibration de l'assise 65 comprise entre 0,1 hertz et 0,5 hertz, par exemple égale à 0,2 hertz.

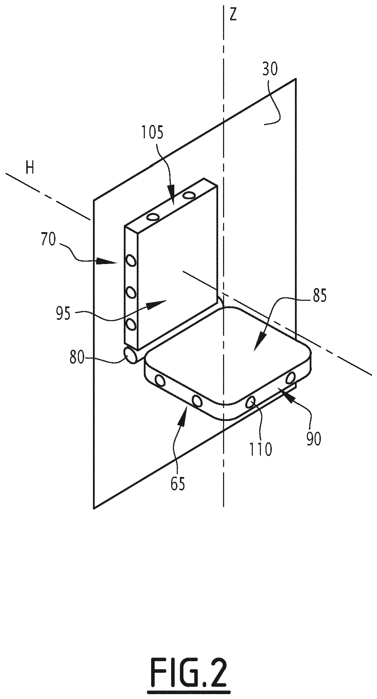

Un siège 40 d'un deuxième exemple de véhicule 10 est représenté en perspective sur la figure 2. Dans la description qui va suivre du deuxième exemple, les éléments identiques au premier exemple ne sont pas décrits à nouveau. Seules les différences sont mises en évidence.

Le troisième signal est un signal à destination d'un passager distant du siège 40, c'est-à-dire d'un passager qui n'est pas assis sur l'assise 65.

Le troisième signal est, par exemple, un signal lumineux. En variante, le signal est un signal sonore.

Par exemple, le module de signalisation 75 comporte, à la place de l'actionneur, au moins un émetteur lumineux 110, par exemple une pluralité d'émetteurs lumineux 110.

Le module de contrôle est configuré pour commander l'allumage de chaque émetteur lumineux 110 lorsque la valeur mesurée par le détecteur est supérieure au seuil et que l'assise 65 est dans la première position, par exemple suite à la réception des premier et deuxième signaux.

Chaque émetteur lumineux 110 est, par exemple, une diode électroluminescente, ou encore une ampoule à incandescence.

Chaque émetteur lumineux 110 est configuré pour émettre le troisième signal à destination d'un passager du compartiment 15 qui n'est pas assis sur le siège 40 lorsqu'il est allumé. En particulier, chaque émetteur lumineux 110 est prévu pour être visible par ce passager lorsque l'émetteur lumineux 110 est allumé.

Par exemple, chaque émetteur lumineux 110 est disposé sur un pourtour de l'assise 65 ou du dossier 70. Par exemple, chaque émetteur lumineux 110 est disposé sur la première face périphérique 90 ou sur la deuxième face périphérique 105. En particulier, comme représenté sur la figure 2, une pluralité d'émetteurs lumineux 110 sont disposés sur chacune de la première face périphérique 90 et de la deuxième face périphérique 105.

En variante, au moins un émetteur lumineux 110 est disposé verticalement à l'aplomb du siège 40, et/ou configuré pour éclairer le siège 40 et un passager assis sur le siège 40 avec un rayonnement lumineux.

Le module de signalisation 75 est, par exemple, configuré pour allumer en continu chaque émetteur lumineux 110 lorsque le troisième signal est généré.

En variante, le module de signalisation 75 est configuré pour allumer de manière intermittente, notamment périodique, chaque émetteur lumineux 110 lorsque le troisième signal est généré. Par exemple le module de signalisation 75 est configuré pour allumer alternativement chaque émetteur lumineux 110 selon une séquence prédéterminée.

Il est à noter que des modes de réalisation dans lesquels le troisième signal comporte une composante à destination du passager assis sur l'assise 65, telle que la mise en vibration de l'assise, et une composante à destination des autres passagers, telle que l'allumage des émetteurs 110, sont également envisageables.

Grâce à l'invention, le troisième signal incite une personne assise sur le siège 40 à se mettre en position debout lorsque le nombre de passagers dans le compartiment 15 est élevé et qu'il est donc souhaitable qu'elle libère cette place. Cela permet donc d'augmenter la sensation de confort pour les autres passagers présents dans le compartiment, notamment pour les passagers debout.

Lorsque le troisième signal est un signal à destination du passager assis sur l'assise 65, ce signal est discret et n'incommode pas les autres passagers.

La mise en vibration de l'assise 65 est aisément perçue par le passager assis sur l'assise 65 même s'il est absorbé dans une activité ou s'il écoute de la musique.

Lorsque le troisième signal est à destination d'un ou plusieurs passagers distants du siège 40, ceux-ci sont informés que la personne assise sur l'assise 65 devrait se lever. Cela peut inciter plus efficacement à se lever des personnes qui seraient peu sensibles à un message à leur intention mais qui seraient sensibles à la pression sociale des autres passagers.

L'allumage d'émetteurs lumineux présente l'avantage de ne pas provoquer d'inconfort pour la personne assise sur l'assise 65, ce qui est notamment préférable lorsque cette personne est une femme enceinte ou une personne malade ou âgée qui est donc légitimement assise malgré le grand nombre de passagers.

La disposition des émetteurs lumineux 110 sur les pourtours 90, 105 de l'assise 65 et/ou du dossier 70 permet aux autres passagers de bien voir les émetteurs 110 lorsqu'ils sont allumés.

## Revendications

1. Dispositif d'accueil (40) de passager pour véhicule (10) de transport en commun, destiné à être installé dans un compartiment (15) dudit véhicule, le dispositif d'accueil (40) comportant :
- une assise (65) mobile entre une première position dans laquelle l'assise (65) est configurée pour permettre à un passager de s'asseoir sur l'assise (65) et une deuxième position empêchant un passager de s'asseoir sur l'assise (65), le dispositif d'accueil (40) étant **caractérisé en ce qu'**il comporte, en outre:
- des moyens de détection propres à détecter une présence de l'assise (65) dans la première position, un module de signalisation (75) propre à recevoir une valeur d'un paramètre du compartiment (15) du véhicule, le paramètre étant fonction d'une densité de passagers présents dans le compartiment (15), et **en ce que** le module de signalisation (75) est configuré pour générer un signal à destination d'au moins un passager présent dans le compartiment (15) lorsque la valeur est supérieure ou égale à un seuil prédéterminé et que l'assise (65) est dans la première position.

2. Dispositif selon la revendication 1, dans lequel le dispositif (40) comprend un détecteur (35) configuré pour mesurer la valeur du paramètre du compartiment (15), le paramètre étant une masse supportée par un sol (25) du compartiment (15) ou un nombre de passagers présents dans le compartiment (15).

3. Dispositif selon la revendication précédente, dans lequel le détecteur (35) comporte un module de calcul (60) et un imageur (55) propre à acquérir une image du compartiment, le module de calcul (60) étant configuré pour calculer le nombre de passagers présents dans le compartiment (15) à partir au moins de l'image acquise.

4. Dispositif selon l'une quelconque des revendications précédentes, dans lequel le signal est un signal à destination d'un passager assis sur l'assise (65).

5. Dispositif selon la revendication précédente, dans lequel le module de signalisation (75) comporte un actionneur propre à faire vibrer l'assise (65), le signal comportant une vibration de l'assise (65).

6. Dispositif selon l'une quelconque des revendications précédentes, dans lequel le module de signalisation (75) comporte au moins un émetteur lumineux (110) propre à émettre un signal lumineux.

7. Dispositif selon la revendication précédente, dans lequel l'assise (65) présente un premier pourtour (90), le module de signalisation (75) comportant une pluralité d'émetteurs lumineux (110) disposés sur le premier pourtour (90).

8. Dispositif selon la revendication 6 ou 7, dans lequel le dispositif d'accueil (40) comporte un dossier (70), le dossier (70) présentant un deuxième pourtour (105), le module de signalisation (75) comportant une pluralité d'émetteurs lumineux (110) disposés sur le deuxième pourtour (105).

9. Véhicule (10) de transport en commun comportant au moins un compartiment (15) de transport de passagers, le compartiment (15) comprenant un support (30) et au moins un dispositif d'accueil de passager (40) comportant une assise (65) supportée par le support (30), **caractérisé en ce que** le dispositif d'accueil est selon l'une quelconque des revendications précédentes.

10. Véhicule selon la revendication précédente, dans lequel le compartiment (15) comporte une porte (45) permettant aux passagers d'entrer dans le compartiment (15) depuis l'extérieur du véhicule (10).

## Patentansprüche

1. Aufnahmevorrichtung (40) für Fahrgast für ein Fahrzeug (10) des öffentlichen Verkehrs, die dazu bestimmt ist, in einem Abteil (15) des Fahrzeugs installiert zu werden, die Aufnahmevorrichtung (40) umfassend:
- eine Sitzfläche (65), die zwischen einer ersten Position, in der die Sitzfläche (65) konfiguriert ist, um einem Fahrgast zu ermöglichen, sich auf die Sitzfläche (65) zu setzen, und einer zweiten Position, die einen Fahrgast daran hindert, sich auf die Sitzfläche (65) zu setzen, beweglich ist, wobei die Aufnahmevorrichtung (40) **dadurch gekennzeichnet ist, dass** sie ferner Folgendes umfasst:
- Erfassungseinrichtungen, die geeignet sind, um ein Vorhandensein des Sitzes (65) in der ersten Position zu erfassen,
ein Signalmodul (75), das geeignet ist, um einen Wert eines Parameters des Abteils (15) des Fahrzeugs zu empfangen, wobei der Parameter von einer Dichte von Fahrgasten abhängt, die in dem Abteil (15) vorhanden sind, und dadurch, dass das Signalmodul (75) konfiguriert ist, um ein Signal an mindestens einen in dem Abteil (15) vorhandenen Fahrgast zu erzeugen, wenn der Wert größer als oder gleich wie ein vorbestimmten Schwellenwert ist und die Sitzfläche (65) in der ersten Position ist.

2. Vorrichtung nach Anspruch 1, wobei die Vorrichtung (40) einen Detektor (35) umfasst, der konfiguriert ist, um den Wert des Parameters des Abteils (15) zu messen, wobei der Parameter eine von einem Boden (25) des Abteils (15) getragene Masse oder eine Anzahl von in dem Abteil (15) vorhandenen Fahrgästen ist.

3. Vorrichtung nach dem vorherigen Anspruch, wobei der Detektor (35) ein Rechenmodul (60) und einen Bildgeber (55) umfasst, der geeignet ist, um ein Bild des Abteils zu erfassen, wobei das Rechenmodul (60) konfiguriert ist, um die Anzahl der in dem Abteil (15) vorhandenen Fahrgäste mindestens anhand des erfassten Bilds zu berechnen.

4. Vorrichtung nach einem der vorherigen Ansprüche, wobei das Signal ein Signal an einen Fahrgast ist, der auf der Sitzfläche (65) sitzt.

5. Vorrichtung nach dem vorherigen Anspruch, wobei das Signalmodul (75) einen Aktuator umfasst, der geeignet ist, um die Sitzfläche (65) vibrieren zu lassen, das Signal umfassend eine Vibration der Sitzfläche (65).

6. Vorrichtung nach einem der vorherigen Ansprüche, wobei das Signalmodul (75) mindestens einen Lichtsender (110) aufweist, der geeignet ist, um ein Lichtsignal auszusenden.

7. Vorrichtung nach dem vorherigen Anspruch, wobei die Sitzfläche (65) einen ersten Umfang (90) aufweist, das Signalmodul (75) umfassend eine Vielzahl von Lichtsendern (110), die an dem ersten Umfang (90) angeordnet sind.

8. Vorrichtung nach Anspruch 6 oder 7, wobei die Aufnahmevorrichtung (40) eine Rückenlehne (70) umfasst, wobei die Rückenlehne (70) einen zweiten Umfang (105) aufweist, das Signalmodul (75) umfassend eine Vielzahl von Lichtsendern (110), die an dem zweiten Umfang (105) angeordnet sind.

9. Fahrzeug (10) für den öffentlichen Verkehr, umfassend mindestens ein Abteil (15) zum Befördern von Fahrgästen, das Abteil (15) umfassend einen Träger (30) und mindestens eine Fahrgastaufnahmevorrichtung (40) umfassend eine Sitzfläche (65), die von dem Träger (30) getragen wird, **dadurch gekennzeichnet, dass** die Aufnahmevorrichtung gemäß einem der vorherigen Ansprüche ist.

10. Fahrzeug nach dem vorherigen Anspruch, wobei das Abteil (15) eine Tür (45) umfasst, die es den Fahrgästen ermöglicht, von außerhalb des Fahrzeugs (10) in das Abteil (15) einzusteigen.

## Claims

1. A passenger-receiving device (40) for a public transportation vehicle (10), designed to be installed in a compartment (15) of said vehicle, the receiving device (40) comprising:
- a seat bottom (65) movable between a first position in which the seat bottom (65) is configured to allow a passenger to sit on the seat bottom (65) and a second position preventing a passenger from sitting on the seat bottom (65),
the receiving device (40) being **characterized in that** it further comprises:
- detection means able to detect a presence of the seat bottom (65) in the first position,
a signaling module (75) able to receive a value of a parameter of the compartment (15) of the vehicle, the parameter depending on a density of passengers present in the compartment (15), and **in that** the signaling module (75) is configured to generate a signal intended for at least one passenger present in the compartment (15) when the value is greater than or equal to a predetermined threshold and the seat bottom (65) is in the first position.

2. The device according to claim 1, wherein the device (40) includes a detector (35) configured to measure the value of the parameter of the compartment (15), the parameter being a weight supported by a floor (25) of the compartment (15) or a number of passengers present in the compartment (15).

3. The device according to the preceding claim, wherein the detector (35) comprises a computing module (60) and an imager (55) able to acquire an image of the compartment, the computing module (60) being configured to compute the number of passengers present in the compartment (15) from at least the acquired image.

4. The device according to any one of the preceding claims, wherein the signal is a signal intended for a passenger seated on the seat bottom (65).

5. The device according to the preceding claim, wherein the signaling module (75) comprises an actuator able to vibrate the seat bottom (65), the signal comprising a vibration of the seat bottom (65).

6. The device according to any one of the preceding claims, wherein the signaling module (75) comprises at least one lighted emitter (110) able to emit a light signal.

7. The device according to the preceding claim, wherein the seat bottom (65) has a first perimeter (90), the signaling module (75) comprising a plurality of lighted emitters (110) arranged on the first perimeter (90).

8. The device according to claim 6 or 7, wherein the receiving device (40) comprises a backrest (70), the backrest (70) having a second perimeter (105), the signaling module (75) comprising a plurality of lighted emitters (110) arranged on the second perimeter (105).

9. A public transportation vehicle (10) comprising at least one passenger transport compartment (15), the compartment (15) comprising a support (30) and at least one passenger-receiving device (40) comprising a backrest (65) supported by the support (30), **characterized in that** the receiving device is according to any one of the preceding claims.

10. The vehicle according to the preceding claim, wherein the compartment (15) comprises a door (45) allowing the passengers to enter the compartment (15) from outside the vehicle (10).
